# EUROPÄISCHE PATENTSCHRIFT

(11) **EP 2 424 655 B1**
(45) Veröffentlichungstag und Bekanntmachung des Hinweises auf die Patenterteilung: **23.08.2017**
(21) Anmeldenummer: 10718940.9
(22) Anmeldetag: 28.04.2010
(51) Int. Cl.: B01J 13/04, B01J 13/14

(54) **VERFAHREN ZUM VERKAPSELN VON FLÜSSIGEN ODER PASTÖSEN SUBSTANZEN IN EINEM VERNETZTEN VERKAPSELUNGSMATERIAL**
METHOD FOR ENCAPSULATING LIQUID OR PASTY SUBSTANCES IN A CROSS-LINKED ENCAPSULATION MATERIAL
PROCÉDÉ D'ENCAPSULATION DE SUBSTANCES LIQUIDES OU PÂTEUSES DANS UN MATÉRIAU D'ENCAPSULATION RÉTICULÉ

(30) Priorität: 29.04.2009 DE 102009019370
(43) Veröffentlichungstag der Anmeldung: 07.03.2012
(73) Patentinhaber: Fraunhofer-Gesellschaft zur Förderung der angewandten Forschung e.V., 80686 München (DE)
(72) Erfinder: BALLWEG, Thomas, 97892 Kreuzwertheim (DE); HANSELMANN, Doris, 97082 Würzburg (DE); GELLERMANN, Carsten, 97218 Gerbrunn (DE); PROBST, Joern, 97273 Kuernach (DE)
(74) Vertreter: Strehl Schübel-Hopf & Partner
(86) Internationale Anmeldenummer: PCT/EP2010/055704
(87) Internationale Veröffentlichungsnummer: WO 2010/125094

(56) Entgegenhaltungen:
- EP-A2- 1 275 757
- WO-A1-01/09414
- WO-A1-2009/115468
- DATABASE WPI Week 199025 Thomson Scientific, London, GB; AN 1990-188853 XP002592909, -& JP 2 122827 A (TORAY SILICONE CO LTD) 10. Mai 1990 (1990-05-10)
- HAAS ET AL: "Hybrid Inorganic-Organic Polymers Based on Organically Modified Si-Alkoxides", ADVANCED ENGINEERING MATERIALS, WILEY VCH VERLAG, WEINHEIM, DE, [Online] Bd. 2, Nr. 9, 1. Januar 2000 (2000-01-01), Seiten 571-582, XP009124212, ISSN: 1438-1656
- BALLWEG T ET AL: "HOHLFASERN AUS HYBRIDEN POLYMEREN", GUMMI, FASERN, KUNSTSTOFFE.INTERNATIONALE FACHZEITSCHRIFT FUR DIE POLYMER-VERARBEITUNG, GENTNER VERLAG. STUTTGART, DE, Bd. 53, Nr. 4, 1. April 2000 (2000-04-01), Seiten 277-281, XP000949731, ISSN: 0176-1625
- K.-H. HAAS, E.A.: "Synthesis and properties of hybrid inorganic-organic polymers based on organically modified Si-alkoxides and their use for permeation control", ADV. SCI. TECHNOL., Bd. 31, 2003, Seiten 581-592, XP002593766,
- BALLWEG T ET AL: "Ormocer- and derived microporous inorganic hollow fibers", KERAMISCHE ZEITSCHRIFT, DVS VERLAG, DUESSELDORF, DE, Bd. 53, Nr. 8, 1. Januar 2001 (2001-01-01) , Seiten 678-680, XP008124629, ISSN: 0023-0561

## Beschreibung

Die vorliegende Erfindung betrifft ein Verkapselungsverfahren zum Verkapseln flüssiger oder pastöser Stoffe.

Die (Mikro)Verkapselung ist ein Prinzip, partikuläre Feststoffe, Flüssigkeiten oder Gase in kleinen Portionen mit einer Hülle zu umgeben. Diese Technik der Ummantelung von (aktiven) Inhaltsstoffen hat in den Bereichen Pharmazie/Medizin, Kosmetik, Ernährung/Lebensmittel, dem Consumer-Bereich, und für die Bereiche Textil, Chemie, Landwirtschaft und Umwelt große Bedeutung mit stark wachsender Tendenz. Mit der Möglichkeit, z. B.
- flüssige Stoffe in Pulver umzuformen,
- leicht flüchtige Stoffe (Aromen, Duftstoffe) einzukapseln,
- Stoffe vor der Reaktion z. B. mit Luft, Licht oder Flüssigkeiten zu schützen,
- Wirkstoffe kontrolliert freizusetzen (z. B. Medikamente),
- toxische Substanzen zu fixieren,
- reaktive Substanzen voneinander getrennt zu halten,
- die Verträglichkeiten von Medikamenten zu verbessern und
- physikalische Eigenschaften von Pulvern zu verbessern, eröffnen sich nicht nur neue Produktqualitäten, sondern auch neue Produktideen und -strategien.

Unter der Vielzahl der Verkapselungstechniken sind viele wirkstoffspezifisch, d. h. auf genau einen Wirkstoff abgestimmt (z. B. Coacervation). In anderen Fällen ist Wärme involviert (thermoplastische Schmelzen), oder es wird ein Lösungsmittel benötigt, so dass empfindliche Materialien Schaden nehmen können. Ein Prinzip (d. h. die Kombination von Material und Verfahren), das eine besonders schonende und saubere Verkapselung ohne Temperaturtönung, Lösungsmitteleintrag, Verunreinigung oder Schädigung empfindlicher Inhaltsstoffe durch Fremdsubstanzen mit einer hohen Kapselungseffizienz und größtmöglichen Variabilität der verkapselbaren Inhaltsstoffe verbindet, ist bislang nicht bekannt.

Abhängig von den physikalischen und chemischen Eigenschaften der Wirksubstanzen, dem Applikationsgebiet und der angestrebten Funktion gibt es verschiedenste Kapselungsmaterialien und Kapselungstechniken. Die wichtigsten apparatetechnisch dominierten Verfahren sind Extrusion, Sprühtrocknung, Rotierende Scheibe und Fluidbadtechnik. Bei den meisten Techniken ist die Applikation von Wärme, Lösungsmittel etc. nicht zu vermeiden. Chemische oder physikalische Phänomene ausnutzende Verfahren, vielfach basierend auf Selbstformierungsprozessen (Emulsionstechniken, Coazervation), haben im Vergleich zu den sequentiellen technischen Verfahren den Vorteil hoher Wirtschaftlichkeit, sind andererseits sehr wirkstoffspezifisch, im Hinblick auf die Kapselungsmaterialien sehr stark eingeschränkt und haben häufig den Nachteil geringer Kapselungseffizienz und Reinheit. Bei Emulsionsverfahren/Coazervation wird der Wirkstoff zunächst in das spätere Schalenmaterial eingemischt. Durch Verfestigung des Schalenmaterials vom Rand her erfolgt die sukzessive Aufkonzentration des Wirkstoffes/Inhaltsstoffes im Innern. Silica-basierte Materialien wiederum benötigen i. A. stark basische Bedingungen zur Ausfällung. Dadurch können die aktiven Komponenten/Inhaltsstoffe kontaminiert oder zerstört werden. Anorganisch-organische Hybridpolymere sind aufgrund ihres variablen Eigenschaftsprofils bisher für eine Vielzahl von Anwendungen vorgeschlagen worden, beispielsweise für funktionale Beschichtungen (Kratzfestschichten, Barriereschichten etc.) sowie für Membrananwendungen. Es wurde auch vorgeschlagen, sie zur Passivierung (mikro) elektronischer Bauelemente einzusetzen, und zwar insbesondere als abschließende Verkapselungsschicht auf Mehrfachschichtenaufbauten. Dabei steht der Begriff "Verkapselung" für die Beschichtung oder Einbettung strukturierter Komponenten, nicht aber für die Ausbildung freitragender Schalen um Inhaltstoffe von variablem Aggregatzustand. Database WPI Week 199025, Thomson Scientific, Londin, GB, AN 1990-188853, XP002592909; JP 2 122 827 A offenbart ein Verfahren zum Verkapseln von Flüssigkeiten in einem vernetzten Verkapselungsmaterial, bei dem eine Flüssigkeit und ein Organopolysiloxan durch eine Düse co-extrudiert werden, wobei das Organopolysiloxan die Flüssigkeit umgibt, das coexdrudierte Material in warmes Wasser geführt wird und dort da Organopolysiloxan vernetzt wird. Ballweg et al., in "Hohlfasern aus hybriden Polymeren", Gummi, Fasern, Kunststoffe, International Fachzeitschrift für die Polymerverarbeitung, Gentner Verlag, Stuttgart, Bd. 53, Nr. 4, 1. April 2000, Seiten 277-281, offenbaren ein Verfahren zur Herstellung von SiO₂-Hohlfasern, indem ein Stützgas und eine Ormocer®-Harz co-etrudiert werden, wobei das Ormocer®-Harz das Stützgas umgibt, gefolgt von einer UV-Härtung und Pyrolyse. Aufgabe der Erfindung ist es, ein Verkapselungsverfahren mit schneller Härtung bereitzustellen, bei dem ein Lösungsmitteleintrag in das zu verkapselnde Material sowie eine Verunreinigung oder Schädigung empfindlicher Inhaltsstoffe durch Fremdsubstanzen vermieden wird und das in der Regel im Wesentlichen ohne Temperaturtönung auskommt. Das erfindungsgemäße Verkapselungsverfahren gemäß Patentanspruch 1 umfasst die Coextrusion eines vernetzbaren Vorläufermaterials des späteren Verkapselungsmaterials zusammen mit dem jeweiligen Inhaltsstoff derart, dass das vernetzbare Vorläufermaterial als Außenmantel (z. B. ringförmig) um den Inhaltstoff herum extrudiert wird. Dabei lassen sich je nach Bedarf durch geeignete Prozessführung faserartige oder partikelförmige Strukturen erhalten, bei denen der Inhaltsstoff von dem Vorläufermaterial umschlossen ist. Unmittelbar oder kurz nach dem Extrusionsschritt und vorzugsweise in relativ großer räumlicher Nähe zur Extrusionsvorrichtung werden die Fasern oder Partikel vorzugsweise mit Hilfe der Schwerkraft durch eine Zone geführt, in der das Vorläufermaterial durch äußere Einwirkung vernetzt wird. Das dabei entstehende Vernetzungsprodukt umschließt als Kapsel oder als Hohlfaser den Inhaltsstoff, der diese Strukturen füllt.

Bei dem vernetzbaren Vorläufermaterial des Verkapselungsmaterials handelt es sich vorzugsweise um ein anorganisch-organisches Hybridmaterial.

Anorganisch-organische Hybridpolymere sind in großer Zahl bekannt. Eine große Gruppe stellen die ORMOCER®e dar, die am Fraunhofer-Institut für Silicatforschung entwickelt wurden. Diese können als Organopolysiloxane oder hydrolytische Kondensate von (Halb-)Metallverbindungen, insbesondere Siliciumverbindungen, angesehen werden, die durch am (Halb-) Metallatom gebundene organische Reste (organisch polymerisierbar/ polymerisiert oder nicht polymerisierbar) modifiziert sind. Neben Siliciumverbindungen können andere hydrolysierbare/hydrolysierte Metallverbindungen, z. B. des Aluminiums, Bors, Germaniums etc. vorhanden sein.

Die Herstellung von organisch modifizierten Polysiloxanen oder Kieselsäurekondensaten (häufig auch als "Silanharze" bezeichnet) und deren Eigenschaften ist in einer Fülle von Publikationen beschrieben worden. Stellvertretend sei hier z. B. auf Hybrid Organic-Inorganic Materials, MRS Bulletin 26(5), 364ff (2001) verwiesen. Ganz allgemein werden solche Substanzen in der Regel mit Hilfe des sogenannten Sol-Gel-Verfahrens hergestellt, worin hydrolyseempfindliche, monomere oder prekondensierte Silane, ggf. in Gegenwart weiterer cokondensierbarer Substanzen wie Alkoxiden des Bor, Germanium, Zirkonium oder Titan, sowie ggf. von zusätzlichen Verbindungen, die als Modifikatoren oder Netzwerkwandler dienen können, oder von sonstigen Additiven wie Farb- und Füllstoffen, einer Hydrolyse und Kondensation unterworfen werden.

Das vernetzbare Vorläufermaterial für das Verkapselungsmaterial der vorliegenden Erfindung wird vorzugsweise aufgebaut aus mindestens einem Silan der Formel (I)

RₐR'_{b}SiX_{4-a-b} (I)

oder unter Verwendung eines solchen Silans, worin die Substituenten R, R' und X jeweils gleich oder verschieden sein können und worin R einen über Kohlenstoff am Silicium gebundenen, thermisch oder durch aktinische Strahlung organisch vernetzbaren Rest darstellt, R' einen über Kohlenstoff am Silicium gebundenen, organisch nicht vernetzbaren Rest darstellt, X eine unter Hydrolysebedingungen hydrolysierbare oder vom Silicium abspaltbare Gruppe oder OH ist, a 1 oder 2 ist, b 0 oder 1 ist und a+b 1 oder 2 sein kann.

Die Vernetzung des Restes R kann über eine bzw. mehrere Gruppen ggf. durch eine thermisch induzierte Polymerisation, vorzugsweise jedoch durch eine mit Hilfe von aktinischer Strahlung, insbesondere UV-Strahlung induzierte Polymerisation erfolgen. Unter "Polymerisation" soll dabei eine Polyreaktion verstanden werden, bei der reaktionsfähige Doppelbindungen oder Ringe unter dem Einfluss von Wärme, Licht oder ionisierender Strahlung in Polymere übergehen (engl.: addition polymerization oder chain-growth polymerization). Beispiele für R sind daher Reste mit einer oder mehreren nichtaromatischen C=C-Doppelbindungen, vorzugsweise einer Michaeladdition zugänglichen Doppelbindungen, wie Vinyle, Styryle oder (Meth)Acrylate. Beispielsweise kann eine kationische Polymerisation mit Hilfe eines kationischen UV-Starters erfolgen, beispielsweise mit einem Epoxysystem (siehe z. B. C.G. Roffey, Photogeneration of Reactive Species for UV Curing, John Wiley & Sons Ltd, (1997)). Alternativ kann die Vernetzung durch andere Polyreaktionen wie ringöffnende Polymerisation erfolgen. Beispiele sind Reaktionen von epoxid- oder norbornenhaltigen Resten R. In spezifischen Ausführungsformen kann diese Polyreaktion direkt, z. B. zwischen einem epoxidhaltigen Rest R an einem ersten Silan der Formel (I) und einem aminhaltigen Rest R an einem zweiten Silan der Formel (I), erfolgen. Der Rest R enthält in der Regel mindestens zwei und vorzugsweise bis zu ca. 50 Kohlenstoffatome. Die organisch vernetzbare Gruppe kann dabei direkt oder über eine Kupplungsgruppe an das Kohlenstoffskelett des Restes R gebunden sein, das seinerseits geradkettig oder verzweigtkettig vorliegen kann. Dementsprechend kann die Kohlenstoffkette des Restes R ggf. durch O, S, NH, CONH, COO, NHCOO oder dgl. unterbrochen sein.

In einer wichtigen Ausführungsform der Erfindung enthält der Rest R eine oder mehrere Vinyl-, Norbornen- und/oder Epoxidgruppen.

Der Rest R' ist einer solchen Reaktion nicht fähig. Vorzugsweise handelt es sich dabei um eine ggf. substituierte Alkyl-, Aryl-, Alkylaryl- oder Arylalkylgruppe, deren Substituenten eine Vernetzung nicht zulassen, wobei die Kohlenstoffkette dieser Reste ggf. durch O, S, NH, CONH, COO, NHCOO oder dgl. unterbrochen sein kann. Bevorzugt sind nicht unterbrochene Reste R' mit 1 bis 30 oder auch bis 50, stärker bevorzugt 1 bis 5 Kohlenstoffatomen. Unsubstituierte oder fluorierte Alkylgruppen mit einer derart großen Anzahl von Kohlenstoffatomen sind besonders bevorzugt, da sie zu einer niedrigen Wasserdampfpermeation beitragen können. Die Wasserdampfpermeation kann allerdings auch dadurch gesenkt werden, dass R' mit einem oder mehreren Substituenten mit spezifischer Funktionalität substituiert ist, beispielsweise mit OH- oder Acrylsäure-Gruppen als Wasserdampffänger oder als hydrophobierende Modifikatoren.

Die Gruppe X in Formel (I) ist eine unter Hydrolysebedingungen hydrolysierbare bzw. vom Silicium abspaltbare Gruppe oder OH. Welche Gruppen hierfür geeignet sind, ist dem Fachmann aus dem Stand der Technik bekannt. In der Regel ist die Gruppe X Wasserstoff, Halogen, Hydroxy, Alkoxy, Acyloxy oder NR"₂ mit R" gleich Wasserstoff oder Alkyl (vorzugsweise mit 1 bis 6 Kohlenstoffatomen). Alkoxygruppen sind als abspaltbare Gruppen bevorzugt, insbesondere Niederalkoxygruppen wie C₁-C₆-Alkoxy.

Da der Index b 0 sein kann, kann das Silan der Formel I einen Rest R in Kombination mit keinem oder einem Rest R' oder zwei Reste R in Kombination mit keinem oder einem Rest R' aufweisen. Die Alternative mit zwei Resten R kann in manchen Fällen bevorzugt sein, weil eine hohe organische Vernetzung eine hohe Dichtigkeit der Verkapselung und damit eine niedrige Wasserdampfpermeationsrate bewirken kann. In anderen Fällen ist es bevorzugt, mindestens ein Silan der Formel (I) mit nur einem Rest R einzusetzen.

Das Vorläufermaterial für das Verkapselungsmaterial kann unter Verwendung mindestens eines weiteren Silans der Formel (II)

R'ₐSiX₄₋ₐ (II)

erzeugt worden sein, worin R' und X jeweils gleich oder verschieden sind und die gleiche Bedeutung wie in Formel (I) besitzen und a 0, 1, 2, 3 oder 4 sein kann. Durch Zugabe solcher Silane mit a = 0 oder 1 zu der zu hydrolysierenden und kondensierenden Mischung, aus der schließlich das Verkapselungsmaterial entsteht, wird der SiO-Anteil des Harzes, also der anorganische Anteil, erhöht. Dadurch lässt sich die die Polymerisation in der Regel begleitende Schrumpfung verringern oder ganz vermeiden. In der Formel (II) ist daher a = 0 oder 1 bevorzugt. Beispiele für derartige Verbindungen sind Tetraethoxysilan und Methyltrimethoxysilan oder Methyltriethoxysilan.

In dieser Ausführungsform der Erfindung wird das Vorläufermaterial vorzugsweise unter Verwendung einer Verbindung mit der Formel (II) hergestellt, die ausgewählt ist unter Methyltriethoxysilan, Dimethyldiethoxysilan und Phenyltriethoxysilan. Dabei wird ganz besonders bevorzugt ein Silan der Formel (I) eingesetzt, in dem R mindestens eine Vinyl-, Norbornen-, (Meth-)Acrylat- oder Epoxygruppe enthält bzw. diese Gruppe ist.

Stattdessen oder gegebenenfalls zusätzlich kann das erfindungsgemäß einsetzbare Vorläufermaterial unter Verwendung mindestens eines Silans mit der Formel (III)

RₐR'₃₋ₐSiX (III)

hergestellt worden sein, worin R, R' und X die voranstehend für Formel (I) angegebene Bedeutung haben und a 1, 2 oder 3 sein kann. Dadurch wird der organische Anteil des Materials erhöht, was die Elastizität des Materials verbessern kann.

Das für die Erfindung geeignete Verkapselungs-Vorläufermaterial kann weitere Substanzen enthalten, z. B. organische Verbindungen von Metallen der III. Hauptgruppe, von Germanium und von Metallen der II., III., IV., V., VI., VII. und VIII. Nebengruppe. Bei diesen Verbindungen handelt es sich vorzugsweise um Komplexe oder chelatisierte Verbindungen, vorzugsweise um niedere (insbesondere C₁-C₆-)Metallalkoxide. Ein weiteres Beispiel sind organische Verbindungen, die als Modifikatoren oder als Quervernetzer dienen können (im letzteren Fall enthalten sie vorzugsweise zwei Reste, die jeweils mit einem Rest R' des Silans der Formeln (I) und/oder (III) eine Polyreaktion eingehen können; Beispiele sind Di(meth)acrylate, wenn die Reste R (meth)acrylathaltig sind, z. B. Dodekandioldimethacrylat.

Soll eine Vernetzung durch UV-Strahlung erfolgen, wird dem Vorläufermaterial außerdem vorzugsweise ein geeigneter UV-Starter, z. B. Irgacure 184 oder Genocure TPO oder eine Kombination aus beidem, zugesetzt.

Dem Vorläufermaterial können außerdem andere geeignete Zusätze beigegeben werden, beispielsweise ein Tensid oder dgl., wie weiter unten erläutert.

Der Ausdruck "(Meth-)Acrylat", und davon abgeleitete Ausdrücke, wie sie vorliegend gebraucht werden, umfassen Methacrylate, Acrylate sowie in seltenen Fällen Mischungen von beiden, bzw. sind entsprechend zu verstehen.

Aus den voranstehenden Erläuterungen wird ersichtlich, dass das Kapselmaterial je nach Bedarf relativ oder völlig dicht gegenüber z. B. Wasserdampf oder bestimmten Gasen gewählt werden kann, oder es ist für diese Stoffe permeabel. Enthält das Kapselmaterial beispielsweise vernetzte Acrylate oder Methacrylate, ist die Kapselwand häufig hochgradig permeabel für Wasserdampf. Derartige Ausführungsformen können in manchen Fällen besonders günstig sein, z. B. wenn ein nachträgliches Austrocknen des Inneren der Kapseln gewünscht ist. In solchen Fällen ist es möglich, das erfindungsgemäße Verfahren einzusetzen, obwohl es Ziel des Verfahrens ist, einen Feststoff zu verkapseln, beispielsweise einen Zucker oder ein Salz. In anderen Fällen sollte die Kapselwand dagegen möglichst feuchtigkeitsdicht sein, beispielsweise für den Fall der Verkapselung von hygroskopischen oder feuchtigkeitsempfindlichen Materialien, darunter z. B. Klebstoff-Komponenten wie Isocyanaten oder Cyanuraten. Hier bietet es sich neben den bereits oben erwähnten Maßnahmen an, Silane der Formel (I) für das Vorläufermaterial einzusetzen, in denen R eine in einen Zyklus eingebundene Doppelbindung, beispielsweise in einer Norbornengruppe, enthält. Auch die Co-Kondensation mit Phenylsilanen der Formel (II) steigert die Feuchtigkeitsdichte. Hilfreich ist weiterhin die Einarbeitung eines oder mehrerer in das Vorläufermaterial des Kapselmaterials einkondensierbarer Metallverbindungen der Formel M^{III}L₃ oder M^{IV}L₄, worin M^{III} ein dreiwertiges Metall und M^{IV} ein vierwertiges Metall bedeuten und L eine Alkoxygruppe oder einen Komplexliganden oder einen Zahn eines mehrzähnigen Komplexliganden bedeutet. Die Metalle hierfür können unter Haupt- und Nebengruppenelementen ausgewählt werden, Beispiele für entsprechende Metallalkoxide sind solche des Bors, Aluminiums, Zirkoniums, Germaniums oder Titans.

Das Vorläufermaterial für das Verkapselungsmaterial wird in der Regel mit Hilfe des sogenannten Sol-Gel-Prozesses aus den monomeren Metallverbindungen, insbesondere den jeweiligen Silanen, erzeugt. Bei diesem Prozess erfolgt die Ausbildung anorganischer Vernetzungsstrukturen; es bilden sich - meist nach Initiierung der Hydrolyse - die gewünschten, anorganisch (teil-)kondensierten Produkte. Der Sol-Gel-Schritt erfolgt in der Regel in einem geeigneten Lösungsmittel. Dabei erhält man ein Harz, dessen Viskosität durch den Vernetzungsgrad gesteuert werden kann. Das Vorläufermaterial der vorliegenden Erfindung wird vorzugsweise mit nur wenig Lösungs- oder Verdünnungsmittel oder - noch stärker bevorzugt - lösemittelfrei eingesetzt; ein Verdünnen, z. B. zum Herabsetzen der Viskosität, ist dennoch in manchen Fällen möglich. Insgesamt sollte jedoch darauf geachtet werden, dass der Lösungsmittelgehalt nicht zu hoch ist (vorzugsweise bei nicht mehr als 5 bis 10 Gew.-% liegt), denn sonst besteht die Gefahr der Zerstörung der Kapseln, wenn nach der Härtung das Lösungsmittel verdampft und die Kapsel durch Schrumpfung unter Spannung gerät. Durch die Variabilität der eingesetzten Ausgangsmaterialien wie auch z. B. des Vernetzungsgrades der daraus hergestellten Prepolymere (der u.a. von der Anzahl der Gruppen X in den Silanen der Formel (I) oder der weiteren Zusätze abhängt) ergibt sich ein Variationspotential, das zur Herstellung unterschiedlicher Hüllenmaterialien und Geometrien genutzt werden kann.

Zusätzlich zu dem wie oben definierten anorganisch-organischen Hybridmaterial kann dem Vorläufermaterial des Verkapselungsmaterials gegebenenfalls ein rein organisches, ebenfalls vernetzbares Material zugesetzt werden, insbesondere ein solches, das unter aktinischer Strahlung (z. B. UV oder sichtbares Licht) eine Polyreaktion, insbesondere eine Polymerisationsreaktion eingeht. Ein Beispiel hierfür sind acrylathaltige Systeme. Je nach Bedarf können dafür Monomere oder Oligomere oder bereits höher vorpolymerisierte Verbindungen eingesetzt werden, damit das Material die gewünschte Viskosität erhält. Die vernetzbaren Gruppen des rein organischen Materials können so gewählt werden, dass sie mit denjenigen des anorganisch-organischen Hybridmaterials copolymerisieren; sie können jedoch auch mit denen des anorganisch-organischen Hybridmaterials diesbezüglich inkompatibel und so gewählt sein, dass sie unter den Polymerisationsbedingungen ein eigenes, das andere Netzwerk penetrierendes Netzwerk ausbilden.

Erfindungsgemäß werden mit Hilfe einer Düsenkombination aus einer in der Regel ringförmigen Düse und einer zentralen, in der Regel konzentrischen Innendüse die Inhaltstoffe unmittelbar entweder in Tropfen oder in hohlförmige Faserstrukturen des Vorläufermaterials (auch als Kondensat, Prepolymer oder Harz bezeichnet) injiziert, welche anschließend verfestigt werden. Die Formen können ineinander übergehen, d. h. je nach Verfahrensführung lassen sich im wesentlichen sphärische Kapseln, eher tropfen- oder eiförmige Kapseln, Kapseln, die über dünne Stege von Kapselmaterial miteinander verbunden sind, Fasern mit periodisch wechselndem Hohlraumdurchmesser oder Fasern mit gleich bleibendem Hohlraumdurchmesser erzeugen. Das rheologische Verhalten des Vorläufermaterials wird so abgestimmt, dass ein geeigneter Kompromiss zwischen oberflächenspannungs-dominiertem Tropfverhalten und polymerem Fadenziehverhalten besteht. Der bevorzugte Viskositätsbereich liegt dabei für die Erzeugung von einzelnen oder nur schwach verbundenen Kapseln zwischen 0,01 bis 50 Pas, vorzugsweise 0,1 bis 50 Pas und ganz besonders bevorzugt bei 1 bis 50 Pas oder bei 0,5 bis 25, eher sogar nur bis 10 Pas bei Raumtemperatur. Diese Viskositäten erlauben, dass Oberflächeneffekte dominieren. Daraus ergibt sich auch ein maximaler Spielraum für Wandstärkenvariationen der Kapselung im Bereich von ca. 20 nm bis ca. 1 mm. Arbeitet man mit Viskositäten, die oberhalb des genannten Bereichs liegen, erhält man Kapseln mit größeren Durchmessern. Für Fasern werden durchschnittlich deutlich höhere Viskositätsbereiche gewählt, typischerweise im Bereich von etwa 1000-5000 Pas. Zusammen mit der Wahl eines geeigneten Härtungsverhalten des Materials (das insbesondere durch die Wahl der organisch vernetzbaren Gruppen bestimmt wird), lässt sich der Kapselungsvorgang daher für die jeweilige zu verkapselnde Substanz bzw. den gewünschten Anwendungsbereich in geeigneter Weise gestalten. Die jeweils gewünschten Viskositäten können ggf. auch über die Temperatur gesteuert bzw. nachjustiert werden, bei der die Verkapselung erfolgt.

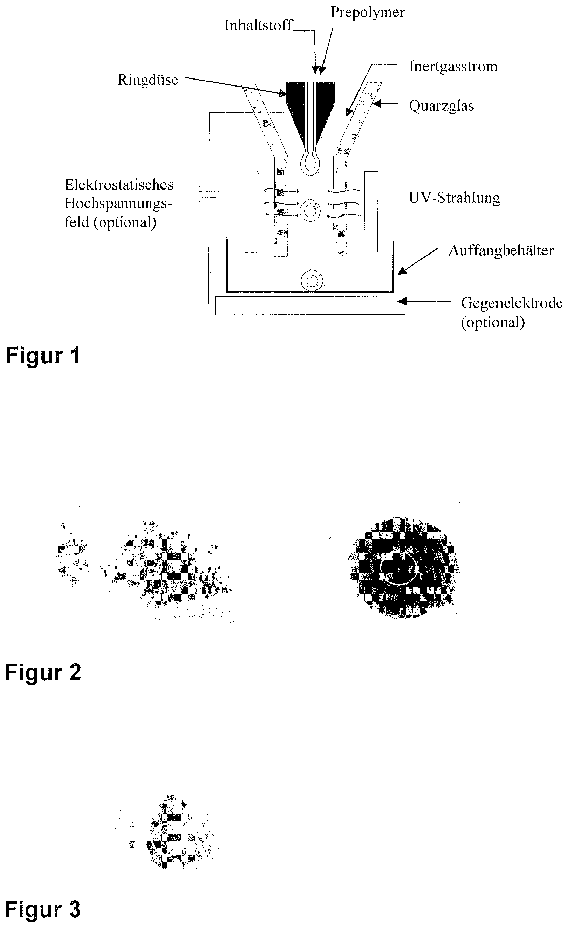

Der technische Ablauf der Vernetzungsreaktion (Härtungsreaktion) ist in Figur 1 beispielhaft dargestellt. Dazu folgendes: Die Erzeugung der Kapseln erfolgt mittels einer Ringdüse mit vorzugsweise konzentrischer Innendüse, wie bereits voranstehend erwähnt. Die zu kapselnde Substanz wird zusammen mit dem Vorläufermaterial für das Verkapselungsmaterial mit Hilfe einer geeigneten Fördereinrichtung (z. B. mittels einer Schlauchpumpe oder durch Druckbeaufschlagung) in die Düsenkonstruktion geführt. Der Durchmesser der Außendüse ist nicht spezifisch beschränkt; er liegt typischerweise im Bereich von ca. 5mm bis 0,1 mm, kann aber zur Erzielung noch kleinerer Kapseln noch eine Größenordnung kleiner sein. Der Durchmesser der Innendüse ist harmonisch auf den Außendurchmesser abgestimmt, liegt demnach also beispielsweise bei 2:3. Die Feineinstellung der Wandstärken der Kapseln wird jedoch vor allem auch durch andere Parameter als diejenigen der Düsengeometrie bestimmt, z. B. durch die gewählten Förderdrücke, die in günstiger Weise im Bereich von 0,1 bis 5 bar Überdruck im Vergleich zum Umgebungsdruck liegen können. Es ist bevorzugt, dass die Düse separat temperierbar ist, beispielsweise im Bereich von 0 bis 100°C und typischerweise im Bereich von 10 bis 80C. Dadurch können relativ hochviskose Inhaltsstoffe und/oder noch relativ hochviskose Harze als Kapselmaterial in den gewünschten Viskositätsbereich überführt werden, ohne dass es (aufgrund der kurzzeitigen Temperaturbelastung) zur Schädigung oder zu unerwünschten Nebeneffekten kommt. Bei geeigneter Abstimmung der Prozessparameter (z. B. einer Temperatur im Bereich von etwa 5 bis 30°C und/oder einer Förderrate von ca. 10⁻⁴ cm³/min bis ca. 10 cm³/min für das Harz und/oder den Inhaltsstoff - je nach gewünschter Größe/Dicke der Kapseln/Fasern und gewünschter Relation von verkapseltem Material zur Wandstärke) resultieren diskrete Kugeln, perlenschnurartig aufgereihte Kugelketten oder gefüllte Hohlfasern, bestehend aus einem (teil-)kondensierten, organisch polymerisierbaren, aber noch nicht (vollständig) organisch polymerisierten Hüllmaterial mit dem Inhaltstoff im Innenbereich. Der Durchmesser der Fasern bzw. die Kugelgröße liegt bevorzugt im Bereich von 0,01 bis 10 mm, ganz besonders bevorzugt im Bereich 0,3-3 mm. Die Wandstärke ist wie erwähnt variabel im Bereich von ca. 20 nm bis 1 mm. Ein besonderer Vorteil der vorliegenden Erfindung liegt darin, dass insbesondere auch sehr dünne Wanddicken- zu Kapseldurchmesser erzielt werden können. Ein Verhältnis Wandstärke zu Kapseldurchmesser von 1:100 ist dabei ohne weiteres möglich. So können stabile Kapseln von z. B. 4 mm Durchmesser mit Wandstärken von 40 µm hergestellt werden.

Die Kapseln aus dem mit Prepolymer-Vorläufer umhüllten Material (dem Inhaltsstoff) werden erfindungsgemäß nicht in einer Flüssigkeit aufgefangen, sondern bewegen sich nach dem Verlassen der Düse im freien Fall auf eine Härtungszone zu und werden also unter dem Eindruck der Erdanziehungskraft beschleunigt. Je größer der Abstand zwischen Düse und Härtungszone ist, desto schneller durchfallen sie die Härtungszone und umso kürzer ist also die Verweilzeit. Ein gewisses Mindestmaß für diesen Abstand ist jedoch zumindest dann erforderlich, wenn einzelne Kapseln gebildet werden sollen: Diese verlassen meist erst in Tropfenform die Düse und benötigen eine gewisse Zeit, die gewünschte (idealerweise sphärische) Geometrie auszubilden. Dem muss die Geometrie der Vorrichtung Rechnung tragen, weil sonst Kapseln mit ungleicher Schalendicke entstehen, die im ungünstigsten Fall Defekte aufweisen. Als günstiger Kompromiss hat sich ein Abstand im Bereich von 10 bis 50 cm erwiesen. Innerhalb dieser Fallstrecke können optional ein oder mehrere Blenden (insbesondere Irisblenden) angebracht sein, um die Düse vor Streulicht aus der Härtungszone zu schützen.

Die Kontaktzeit der Inhaltstoffe mit dem Vorläufermaterial vor der Härtung beträgt in der Regel insgesamt nur eine kurze Zeitspanne (z. B. wenige Sekunden, insbesondere 1-2 sec.), so dass weder eine Kontamination noch eine Belastung des Inhalts erfolgt.

Bei der Härtungszone kann es sich um eine Belichtungszone, stattdessen aber auch um eine Wärmezone handeln, falls thermisch gehärtet werden soll. Im Falle der- bevorzugten - Vernetzung durch aktinische Strahlung ist diese Härtungszone ein Bereich hoher Strahlungsintensität, die durch konventionelle Strahler wie UV-Strahler der Firmen Hoenle oder Fusion bereitgestellt werden kann. Die Länge der Zone ist prinzipiell nicht festgelegt; in günstiger Weise beträgt sie 15-60 cm. Anstelle der fallenden Tropfen könnte eine Faser durch die Polymerisationszone gezogen werden oder passiv hindurch gleiten. Ein elektrostatisches Hochspannungsfeld zwischen der Ringdüse und einer Gegenelektrode unter dem Auffangbehälter kann vorgesehen sein, um das Abreißen der Tropfen zu unterstützen. Zu dem gleichen Zweck kann alternativ oder zusätzlich eine Vibrationsvorrichtung vorgesehen sein.

Die Verweildauer der Kapseln in der Härtungszone beträgt abhängig von der Länge der Härtungszone und dem Abstand Düse-Härtungszone zwischen etwa 0,01 bis 0,5 Sekunden, stärker bevorzugt zwischen etwa 0,03 bis 0,1 Sekunden. Insbesondere ergibt sich bei einer Härtungszonenlänge, insbesondere einer Strahlerlänge von 15 cm und einem Abstand Düse-Strahler (der vorzugsweise ca. 10-30 cm beträgt) von ca. 20 cm eine Verweilzeit von ca. 0,06 Sekunden als typische Verweilzeit. Wenn die Härtung durch UV-Belichtung erfolgt, ist dieser Zeitraum bei Einsatz geeigneter UV-Starter (s.o.) bei hinreichend hoher Strahlungsintensität ausreichend. Falls eine Inhibierung durch Luftsauerstoff beobachtet wird, kann das Strahlungsfeld optional mit Inertgas gespült werden. Bei besonders dicken Schalen können die Kapseln zur völligen Durchhärtung im Bedarfsfall durch Platzierung des Auffangbehälters im Streulichtbereich des Strahlers auch noch nachgehärtet werden.

Die Härtung erfolgt wie erwähnt vorzugsweise mit Hilfe aktinischer Strahlung, d. h. meist photochemisch, beispielsweise mit sichtbarem Licht oder UV-Strahlung. Dadurch wird jede thermische Belastung der Inhaltsstoffe vermieden (kalte Härtung), und darüber hinaus lässt sich für den Fall lichtempfindlicher Inhaltsstoffe auch die (UV-) Strahlungsdosis begrenzen.

Erfolgt die Kapselformierung ohne aktive Tropfenabscherung, erfolgt also die Kapselablösung von der Düse nur unter dem Eindruck der Gewichtskraft der Tropfen, so wird die Tropfengröße primär durch die Oberflächen- und Grenzflächeneigenschaften des Inhaltsstoffes und des Kapselmaterials bestimmt und nur in untergeordnetem Maße durch die Düsengeometrie. Zur Erzielung kleinerer Tropfendurchmesser kann optional die Zugabe von die Oberflächen- und Grenzflächenspannung reduzierenden Substanzen (z. B. Tensiden) erfolgen. In diesem Betriebsmodus erhält man Kapseln typischerweise von 0,5 bis 5 mm Durchmesser. Optional kann die Abscherung und damit derAbriss der Tröpfchen zur Erzielung kleinerer Durchmesser oder zur Erreichung eines höheren Durchsatzes durch spezielle Düsengestaltung, einen gerichteten Gasstrom, durch Schwingungen (Vibrationen), elektrostatische Felder oder andere in Fachkreisen bekannte Mechanismen unterstützt werden. Im Falle des sogenannten laminaren Strahlzerfalls, bei dem die Tropfenbildung schwingungsunterstützt erfolgt, ergibt sich die Kapselgeometrie unmittelbar aus den Düsenabmessungen. Abhängig von der Präzision der Düsengestaltung sind Kapseldurchmesser von unterhalb von 100 µm möglich.

Als Upscaling-Prinzip ist die Parallelisierung des Verfahrens mit Hilfe von Vielfach-Düsen die Methode der Wahl. Dabei können Dutzende (z. B. 50 bis 100) Düsen zum Einsatz gelangen.

Abhängig davon, ob im Einzel- oder Parallelbetrieb gearbeitet wird, ist das Strahlungsfeld unterschiedlich auszuleuchten. Im Falle eines Einzel- oder Monomodalbetriebes ist es günstig, mit Hilfe eines Ellipsoid-Reflektors oder dgl. die Strahlungsintensität in einer Brennlinie zu bündeln, durch die die Kapseln fallen. Im Falle eines Multimodalbetriebes ist eine parabolische Reflektorgeometrie vorteilhaft, die für eine gleichförmige Ausleuchtung des Strahlungsfeldes sorgt.

Die Vernetzung der Kapseln erfolgt wie erwähnt bevorzugt Licht-/UVstrahlungsinduziert, z. B. durch Polymerisation von im Prepolymer vorhandenen Doppelbindungen. Abhängig vom Spektrum der verwendeten Strahlungsquelle wird das Prepolymer zuvor mit einem geeigneten Starter versetzt (z. B. Irgacure 184 oder Lucirin TPO). Im Hinblick auf eine hohe Härtungsgeschwindigkeit sind Acrylatsilane gegenüber Methacrylatsilanen als Verbindungen (I) von Vorteil.

Die sich aus dem Vernetzungsprinzip ergebenden Vorteile sind die besonders schonende und saubere Verkapselung ohne Temperaturtönung, Verunreinigung oder Schädigung empfindlicher Inhaltsstoffe durch Fremdsubstanzen in Kombination mit einer sehr großen Variabilität der verkapselbaren Inhaltsstoffe. Das Verfahren ist einfach, und es können wässrige oder ethanolische Lösungen, Partikelsuspensionen, Öle oder Reaktivstoffe verkapselt werden, wobei grundsätzlich für verschiedene Inhaltsstoffe (wässrige, ölige, ...) dasselbe Verkapselungsmaterial eingesetzt werden könnte.

Erfindungsgemäß verkapselte Substanzen können auf vielen, sehr unterschiedlichen Gebieten eingesetzt werden. Das Anwendungsgebiet erstreckt sich, ohne andere Gebiete auszuklammern, auf die Bereiche Pharmazie, Kosmetik, Automobilindustrie, Ernährung, den Consumer-Bereich, Textil, Chemie, Landwirtschaft und Umwelt.

Nachstehend soll die Erfindung anhand von Beispielen näher erläutert werden.

### Beispiel 1:

### Kapselung wässriger Farbstoffe (Tinte)

### 1. Synthese des prekondensierten Harzes (Vorläufermaterials)

Trimethylolpropantriacrylat (TMPTA, 534 g) in Essigester (1500 ml) mischen. KOH in Ethanol (97,6 g), anschließend Mercaptopropylmethyldimethoxysilan (271 g) zugeben; Kontrolle der Reaktion mit Jodtest. Zur Einleitung der Hydrolyse/-Kondensation des entstandenen Acrylatsilans Wasser zugeben mit HCl als Katalysator; Aufarbeitung: Neutralisieren, Waschen, Filtrieren und Abrotieren. Das Ergebnis ist eine ölige viskose Flüssigkeit (ca. 15 Pas bei RT) mit einer Ausbeute von ca. 500 g. Abschließend benötigte Menge an Starter einrühren (1,5 % Irgacure 184).

### 2. Kapselungsprozess

Als Tinte wird ein Triphenylmethan-Farbstoff in Wasser eingesetzt. Sie wird mit Hilfe einer Schlauchpumpe durch die zentrale Innendüse (ø 0,7 mm) und Harz mittels Druckbeaufschlagung durch die konzentrische Außendüse (ø 1,2 mm) einer Vorrichtung wie in Fig. 1 gezeigt gefördert (Harztemperatur 10°C entsprechend einer Harzviskosität von 45 Pas, Förderdruck 4,5 bar). Tropfen fallen durch einen durch Blenden abgeschirmten UV-Strahler (Fusion HP6), der sich 25 cm unterhalb der Düsenkombination befindet.

Man erhält Kapseln mit einer mittleren Größe von 2,8 mm bei enger Verteilung (± 0,5 mm) und einer Wandstärke von ca. 0,2 mm Größe. Die Kapseln sind z. T. noch über dünne Stege verbunden. Diese lassen sich durch geänderte Prozessparameter (höhere Temperatur, Verlängerung der Fallstrecke oder Bestrahlung der Fallstrecke mit IR-Strahlung zurückbilden bzw. ganz vermeiden. Das Produkt (rechts: eine Kapsel in starker Vergrößerung) ist in Figur 2 dargestellt.

### Beispiel 2:

### Kapselung öliger Substanzen

Kapselungsmaterial und Prozess wie Bsp. 1, Harztemperatur 15 °C entsprechend einer Harzviskosität von 28 Pas und reduziertem Förderdruck (3,0 bar). Verkapselt wird ein kommerziell erhältliches Olivenöl mit einer Viskosität von 220 mPas.

Man erhält Kapseln mit einer mittleren Größe von 2,0 mm bei enger Verteilung (± 0,3 mm), an denen noch ein einzelner Faden des Kapselungsmaterials hängt. Eine solche Kapsel ist in **Figur 3** dargestellt. Die Zurückbildung durch Verlängerung und Erwärmung der Fallstrecke kann gezeigt werden.

### Beispiel 3

### Kapselung ethanolischer Suspensionen

Kapselungsmaterial und Prozess wie Bsp. 1 bei einer Harztemperatur von 15°C. Als Suspension dienen 10 Gew.-% SiO₂-Partikel in Ethanol.

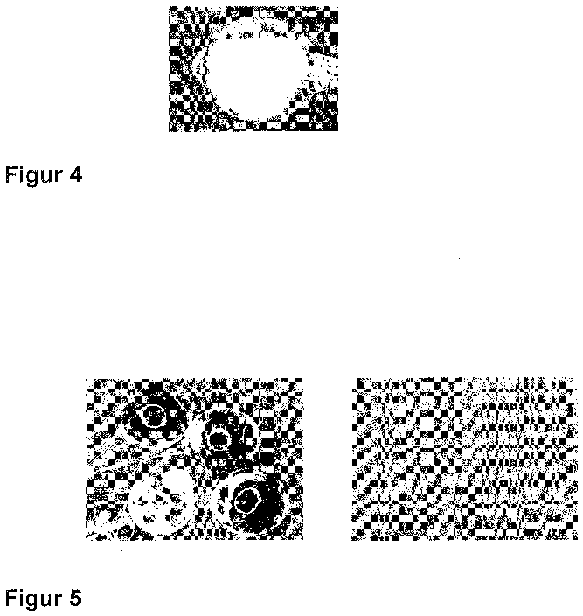

Es ergeben sich Kapseln mit Fadenverlängerung einer mittleren Größe von 2,0 mm mit großer Streubreite (± 1 mm) und dünner Wandstärke (< 100 nm), die eine ethanolische Suspensionen von Silica-Nanopartikeln enthalten. Eine solche Kapsel ist in **Figur 4** dargestellt.

### Beispiel 4

### Kapselung organischer Reaktivmonomere (Dodekandioldimethacrylat)

Kapselungsmaterial und Prozess wie Bsp. 1 bei einer Harztemperatur von 15°C.

Es ergeben sich Kapseln mit einzelnem Faden von einer mittleren Größe von 2,2 mm und enger Verteilung (± 0,3 mm), die das Reaktivmonomer Dodekandioldimethacrylat noch in flüssiger, unreagierter Form enthalten. Die Zurückbildung der Fäden durch adäquate Temperaturführung ist möglich (siehe **Figur 5**).

### Beispiel 5

### 1. Synthese des prekondensierten Harzes (Vorläufermaterial):

Trimethylolpropapantrimethacrylat in Methylisobutylketon mischen. Zur Additionssynthese KOH in Ethanol und anschließend Mercaptopropylmethyldimethoxysilan zugeben. Vorhydrolyse (3h) des entstandenen Methacrylat-Silans mit Wasser und HCl als Katalysator. Zugabe vom Methyltriethoxysilan und vollständige Hydrolyse/Kondensation. Aufarbeitung durch Neutralisierung, Waschen, Filtrieren und Abrotieren. Das Ergebnis ist eine ölige Flüssigkeit von 25 Pas bei RT. Zugabe der Starterkombination Irgacure 185 (0,5 Gew.%) und Genocure TPO (0,5 Gew.%).

### 2. Kapselung von konzentrierten Salzlösungen

Es wurden Kapseln einer konzentrierten Salzlösung mit einem Füllvolumen von ca. 30 mm³ entsprechend einem Kapselaußendurchmesser von ca. 4 mm hergestellt. Die Wandstärke wurde durch Variation der Förderdrucke im Bereich von 0,05 bis 0,5 mm variiert. Zur Optimierung der Kugeln im Hinblick auf Sphärizität erfolgte die Verkapselung bei 50 °C entsprechend einer Viskosität von ca. 1 Pas.

### Beispiel 6

### 1. Synthese des prekondensierten Harzes (Vorläufermaterial):

Glyerin-1,3-dimethacrylat wurde vorgelegt, der Katalysator Dibutylzinnlaurat hinzugegeben und durch langsame Zugabe von 3-Isocyanatopropyltriethoxysilan die Addition eingeleitet. Zugabe von Dokekandioldimethacrylat als Reaktivmonomer und Netzwerkwandler und Ethylacetat als Lösungsmittel. Hydrolyse und Kondensation mit Wasser und Ammoniumfluorid als Katalysator. Die Aufarbeitung erfolgte durch Auswaschen des Ammoniumfluorids, Filtration und Abrotieren des Restlösungsmittels. Zugabe der Starterkombination Irgacure 185 (0,5 Gew.%) und Genocure TPO (0,5 Gew.%).

### 2. Verkapselung von Klebstoff-Komponenten

Als Verarbeitungstemperatur wurde 55 °C entsprechend einer Viskosität von ca. 2 Pas gewählt.

Es wurden diverse Klebstoffe gekapselt. Insbesondere wurden einzelne Fraktionen (z. B. Härter- oder Harzkomponente oder beide) von Zwei-Komponentenklebstoffen gekapselt. Diese wurden zusammengemischt (z. B. gekapselter Härter in Harz), ohne dass es zur Reaktion kommt. Erst bei der Applikation kommt es beim Zusammenfügen der Klebflächen durch mechanische Sprengung der Kapseln zur zeitlich genauen, definierten Aushärtung. Der erforderliche Homogenisierungs- und Durchmischungsgrad bestimmt dabei die Größe der Kapseln. Das glasartige Sprödbruchverhalten der Kapseln begünstigt die restlose Freisetzung.

Die Größe der Klebstoff-gefüllten Kapseln wurde durch aktive schwingungsinduzierte Tropfenabscherung im Bereich von 0,5 bis 5 mm variiert.

### Beispiel 7

### Kapselmaterial entsprechend Beispiel 5

Es wurden strukturviskose, mit Aerosil versetzte Klebstoffkomponenten gekapselt. Aufgrund der pastösen Eigenschaft ergaben sich keine sphärischen Tropfen, sondern reiskornartige Geometrien.

### Beispiel 8 (Referenzbeispiel)

### Kapselmaterial entsprechend Beispiel 6

Es wurden mit entionisiertem Wasser gefüllte Kapseln hergestellt. Durch Trocknen bei RT wurde das Wasser entfernt und Hohlkugeln erhalten (Durchmesser ca. 4 mm, Wandstärke 100 µm). Durch eine zweistufige Pyrolyse wurden mikroporöse SiO₂-Hohlkugeln erhalten.

## Patentansprüche

1. Verfahren zum Verkapseln eines flüssigen oder pastösen Stoffes in einem vernetzten Verkapselungsmaterial, **dadurch gekennzeichnet, dass** der flüssige oder pastöse Stoff und ein anorganisch zumindest teilkondensiertes und organisch polymerisierbares anorganisch-organisches Hybridmaterial als ein vernetzbares Vorläufermaterial des Verkapselungsmaterials durch eine Düse co-extrudiert werden, derart, dass das vernetzbare Vorläufermaterial den flüssigen oder pastösen Stoff umgibt, worauf das co-extrudierte Material durch eine Härtungszone geführt wird, bei der es sich um einen mit Luft oder Inertgas gefüllten Bereich handelt, in dem eine Vernetzung des Vorläufermaterials durch thermisch oder durch mit Hilfe von aktinischer Strahlung induzierte Polymerisation der organisch polymerisierbaren Gruppen des anorganisch zumindest teilkondensierten und organisch polymerisierbaren anorganisch-organischen Hybridmaterials bewirkt wird, wobei die Verweildauer des co-extrudierten Materials in dieser Härtungszone 0,01 bis 0,5 s beträgt.

2. Verfahren nach Anspruch 1, **dadurch gekennzeichnet, dass** das vernetzbare Vorläufermaterial des Verkapselungsmaterials ein Organopolysiloxan ist, das organisch vernetzbare Gruppen aufweist, die vollständig oder zumindest teilweise an Siliciumatomen gebunden sind.

3. Verfahren nach Anspruch 2, worin das vernetzbare Vorläufermaterial für das Verkapselungsmaterial aus oder unter Verwendung mindestens eines Silans der Formel (I)
RₐR'_{b}SiX_{4-a-b} (I)
hergestellt wurde, worin die Substituenten R, R' und X jeweils gleich oder verschieden sein können und worin R einen über Kohlenstoff am Silicium gebundenen, thermisch oder durch aktinische Strahlung organisch vernetzbaren Rest darstellt, R' einen über Kohlenstoff am Silicium gebundenen, organisch nicht vernetzbaren Rest darstellt, X eine unter Hydrolysebedingungen hydrolysierbare oder vom Silicium abspaltbare Gruppe oder OH ist, a 1 oder 2 ist, b 0 oder 1 ist und a+b 1 oder 2 sein kann.

4. Verfahren nach Anspruch 3, worin zumindest ein Teil der Reste R ausgewählt ist unter acrylat- und/oder methacrylathaltigen und/oder epoxygruppenhaltigen Resten.

5. Verfahren nach einem der Ansprüche 3 oder 4, worin das Vorläufermaterial für das Verkapselungsmaterial weiterhin
unter Verwendung mindestens eines weiteren Silans der Formel (II)
R'ₐSiX₄₋ₐ (II)
worin R' und X jeweils gleich oder verschieden sind und die gleiche Bedeutung wie in Formel (I) besitzen und a 0, 1, 2, 3 oder 4, vorzugsweise 0 oder 1 bedeutet, oder
unter Verwendung mindestens eines Silans mit der Formel (III)
RₐR'₃₋ₐSiX (III)
worin R, R' und X die in Anspruch 3 für Formel (I) angegebene Bedeutung haben und a 1, 2 oder 3 sein kann,
oder
unter Verwendung von mindestens einer organischen Verbindung eines Metalls der III. Hauptgruppe, von Germanium und/oder eines Metalls der II., III., IV., V., VI., VII. und VIII. Nebengruppe hergestellt wurde.

6. Verfahren nach einem der Ansprüche 3 bis 5, worin das Vorläufermaterial mit Hilfe des Sol-Gel-Verfahrens hergestellt wurde.

7. Verfahren nach einem der voranstehenden Ansprüche, worin der flüssige oder pastöse Stoff und das Vorläufermaterial durch eine Ringdüse coextrudiert werden, die sich neben oder oberhalb einer Vernetzungszone befindet, in der das Coextrudat anschließend durch Einwirkung von Wärme oder aktinischer Strahlung einer organischen Vernetzung unterworfen wird.

8. Verfahren nach Anspruch 7, **dadurch gekennzeichnet, dass** das vernetzbare Vorläufermaterial des Verkapselungsmaterials eine Viskosität im Bereich von 0,1 bis 50 Pas aufweist und/oder mit einem Überdruck von 0,1 bis 5 bar und/oder mit einer Förderrate von 10⁻⁴ cm³/min bis 10³ cm³/min extrudiert wird.

9. Verfahren nach Anspruch 7 oder 8, worin das co-extrudierte Material im freien Fall durch die Vernetzungszone geführt wird, die Vernetzung durch aktinische Strahlung erfolgt und die Verweildauer des co-extrudierten Materials in der Vernetzungszone zwischen 0,03 und 0,1 Sekunden liegt.

10. Verfahren nach Anspruch 9, worin zwischen der Düse und einem Untergrund, auf dem sich ein Auffanggefäß für das verkapselte Material befindet, ein elektrostatisches Hochspannungsfeld angelegt wird, und/oder worin Vibrationen in den Kopf der Düse eingekoppelt werden.

## Claims

1. A method for encapsulating a liquid or pasty substance in a cross-linked encapsulation material, **characterized in that** the liquid or pasty substance and an inorganic at least partially condensed and organic polymerizable inorganic-organic hybrid material are co-extruded as a cross-linkable precursor material of the encapsulation material through a nozzle, such that
the cross-linkable precursor material surrounds the liquid or pasty substance, whereupon the co-extruded material is passed through a curing zone which is a section filled with air or an inert gas, in which a cross-linking of the precursor material is effected by thermally induced polymerization or polymerization induced using actinic radiation to polymerize the organic polymerizable groups of the inorganic at least partially condensed and organic polymerizable inorganic-organic hybrid material, wherein the residence time of the co-extruded material in this curing zone is 0.01 to 0.5 sec.

2. Method in accordance with claim 1, **characterized in that** the cross-linkable precursor material of the encapsulation material is an organopolysiloxane, which has organically cross-linkable groups, which are completely or at least partly bound to silicon atoms.

3. Method in accordance with claim 2, wherein the cross-linkable precursor material for the encapsulation material was produced from or using at least one silane of the formula (I)
RₐR'_{b}SiX_{4-a-b} (I)
wherein the substituents R, R' and X may each be the same or different and wherein R represents an organic radical that is bound to silicon via carbon and that can be cross-linked by heat or actinic radiation, R' represents a radical that is bound to silicon via carbon and that cannot be organically cross-linked, X is a group that can be hydrolyzed under hydrolysis conditions or that can be separated from the silicon, or OH, a is 1 or 2, b is 0 or 1, and a+b may be 1 or 2.

4. Method in accordance with claim 3, wherein at least some of the radicals R are selected from among acrylate- and/or methacrylate-containing and/or epoxy group-containing radicals.

5. Method in accordance with one of the claims 3 or 4, wherein the precursor material for the encapsulation material was additionally produced using at least one other silane of the formula (II)
R'ₐSiX₄₋ₐ (II)
wherein R' and X are each the same or different and have the same meaning as in formula (I), and a is 0, 1, 2, 3 or 4, and preferably 0 or 1,
or
using at least one silane having the formula (III)
RₐR'₃₋ₐSiX (III)
wherein R, R' and X have the meaning given in claim 1 for formula (I) and a may be 1, 2 or 3,
or
using at least one organic compound of a metal of the main group III, of germanium and/or of a metal of the subgroup II, III, IV, V, VI and VII.

6. Method in accordance with one of the claims 3 through 5, wherein the precursor material was produced by means of the sol-gel process.

7. Method in accordance with one of the preceding claims, wherein the liquid or pasty substance and the precursor material are co-extruded through an annular nozzle, which is located next to or about a cross-linking zone, in which the co-extrudate is then subjected to an organic cross-linking under the effect of heat or actinic radiation.

8. Method in accordance with claim 7, **characterized in that** the cross-linkable precursor material of the encapsulation material has a viscosity in the range of 0.1 to 50 Pas and/or is extruded with an overpressure of 0.1 to 5 bar and/or with a delivery rate of 10⁻⁴ cm³/min to 10³ cm³/min.

9. Method in accordance with claim 7 or 8, wherein the co-extruded material is passed in free fall through the cross-linking zone, the cross-linking is performed by actinic radiation, and the residence time of the co-extruded material in the cross-linking zone is between 0.03 and 0.1 seconds.

10. Method in accordance with claim 9, wherein an electrostatic high-voltage field is applied between the nozzle and a background, on which is located a receptacle for the encapsulated material, and/or wherein vibrations are coupled into the head of the nozzle.

## Revendications

1. Procédé d'encapsulation d'une substance liquide ou pâteuse dans un matériau d'encapsulation réticulé, **caractérisé en ce que** la substance liquide ou pâteuse et un matériau hybride organique-inorganique au moins partiellement condensé inorganiquement et polymérisable organiquement, faisant fonction de matériau précurseur réticulable pour le matériau d'encapsulation, sont co-extrudés à travers une filière, de telle manière que le matériau précurseur réticulable enveloppe la substance liquide ou pâteuse, le matériau co-extrudé étant ensuite acheminé à travers une zone de durcissement, qui est une zone remplie d'air ou de gaz inerte, dans laquelle une réticulation du matériau précurseur est provoquée par une polymérisation induite thermiquement ou sous l'action d'un rayonnement actinique des groupes polymérisables organiquement du matériau hybride inorganique-organique au moins partiellement condensé inorganiquement et polymérisable organiquement, dans lequel la durée de séjour du matériau co-extrudé dans cette zone de durcissement vaut 0,01 à 0,5 s.

2. Procédé selon la revendication 1, **caractérisé en ce que** le matériau précurseur réticulable pour le matériau d'encapsulation est un organopolysiloxane, qui présente des groupes réticulables organiquement, qui sont liés entièrement ou au moins en partie à des atomes de silicium.

3. Procédé selon la revendication 2, dans lequel le matériau précurseur réticulable pour le matériau d'encapsulation a été produit à partir de ou avec utilisation d'au moins un silane de la formule (I)
RₐR'_{b}SiX_{4-a-b} (I)
dans lequel les substituants R, R' et X peuvent chaque fois être identiques ou différents et dans lequel R représente un radical lié au silicium par un carbone et réticulable thermiquement ou organiquement sous l'action d'un rayonnement actinique, R' représente un radical lié au silicium par un carbone et non réticulable organiquement, X est un groupe hydrolysable dans des conditions d'hydrolyse ou pouvant être détaché du silicium ou un OH, a peut être 1 ou 2, b peut être 0 ou 1 et a+b peut être 1 ou 2.

4. Procédé selon la revendication 3, dans lequel au moins une partie des radicaux R est sélectionnée parmi les radicaux contenant des groupes acrylate et/ou méthacrylate et/ou époxyde.

5. Procédé selon une des revendications 3 ou 4, dans lequel le matériau précurseur pour le matériau d'encapsulation a été produit en outre
par utilisation d'au moins un autre silane de la formule (II)
R'ₐSiX₄₋ₐ (II)
dans laquelle R' et X sont chaque fois identiques ou différents et ont la même signification que dans la formule (I) et a vaut 0, 1, 2, 3 ou 4, de préférence 0 ou 1, ou
par utilisation d'au moins un silane de la formule (III)
RₐR'₃₋ₐSiX (III)
dans laquelle R, R' et X ont la signification indiquée dans la revendication 3 pour la formule (I) et a peut être 1, 2 ou 3, ou
par utilisation d'au moins un composé organique d'un métal du groupe principal III., du germanium, et/ou d'un métal des groupes secondaires II., III., IV., V., VI., VII. et VIII.

6. Procédé selon l'une quelconque des revendications 3 à 5, dans lequel le matériau précurseur a été produit à l'aide du procédé sol-gel.

7. Procédé selon l'une quelconque des revendications précédentes, dans lequel la substance liquide ou pâteuse et le matériau précurseur sont co-extrudés à travers une filière annulaire, qui se trouve à côté ou au-dessus d'une zone de réticulation, dans laquelle le co-extrudat est ensuite soumis à une réticulation organique par l'action de la chaleur ou d'un rayonnement actinique.

8. Procédé selon la revendication 7, **caractérisé en ce que** le matériau précurseur réticulable pour le matériau d'encapsulation présente une viscosité comprise dans la plage de 0,1 à 50 Pas et/ou est extrudé avec une surpression de 0, 1 à 5 bar et/ou avec un débit compris entre 10⁻⁴ cm³/min et 10³ cm³/min.

9. Procédé selon la revendication 7 ou 8, dans lequel le matériau co-extrudé est conduit en chute libre à travers la zone de réticulation, la réticulation se produit sous l'action d'un rayonnement actinique et la durée de séjour du matériau co-extrudé dans la zone de réticulation se situe entre 0,03 et 0,1 seconde.

10. Procédé selon la revendication 9, dans lequel un champ électrostatique à haute tension est installé entre la filière et un support, sur lequel se trouve un récipient de réception pour le matériau encapsulé, et/ou dans lequel des vibrations sont appliquées à la tête de la filière.
